# EUROPEAN PATENT APPLICATION

(11) **EP 4 574 391 A1**
(43) Date of publication of application: **25.06.2025**
(21) Application number: 24221892.3
(22) Date of filing: 19.12.2024
(51) Int. Cl.: B29C 45/17, B29C 45/76, B29C 45/27, B29C 45/28

(54) **INJECTION MOLDING SYSTEM AND METHOD**

(30) Priority: 22.12.2023 IT 202300027903
(71) Applicant: Inglass S.p.A., 31020 San Polo di Piave (Treviso) (IT)
(72) Inventor: De Iesu, Stefano, 31020 S. Polo di Piave (IT); Daniel, Roberto, 31020 S. Polo di Piave (IT)
(74) Representative: Citron, Massimiliano

(57) **Abstract**

A method is described for injection molding a hollow object. The method has the steps of:
(i) waiting for a cycle start signal from a press,
(ii) upon receiving the cycle start signal, driving an actuator in order to regulate a flow of molten material towards a mold cavity by displacing a shutter,
(iii) after a certain time, or simultaneously, sending a fluid injection signal to an injection unit in order to command the latter to activate a fluid injector to inject fluid under pressure into the mold cavity;
(iv) after a certain time, or simultaneously, driving the actuator in order to regulate, by displacing the shutter with positional continuity and/or according to a programmed dynamic profile, a flow of molten material that the pressurized fluid is removing from the cavity and pushing towards the press.

## Description

The present invention relates to an improved injection molding system and method wherein, for example, *Water Injection Technology* (WIT) is used.

WIT is a technique in the plastic injection industry that allows obtaining objects with complex geometry hollowed out inside by injecting water at high pressure. This method is used to reduce the final weight of the component and shorten the cooling time during the molding cycle. See e.g. DE102006048788 and the scheme in fig. 1.

A known system 100 comprises a mold 10 with a mold cavity 12. In the mold 10 there are installed a *hot runner* 14 equipped with one or more nozzles 16 towards the cavity 12 which can each be closed by a respective shutter 18 to block or allow the flow of molten material towards the cavity 12, and with one or more water injectors 20 to inject pressurized water into the cavity 12.

Each shutter 18 is operated pneumatically or hydraulically, so that the respective nozzle 16 can assume only two states: totally open or totally closed.

A press 90 external to the mould 10 comprises means 92 (e.g. a worm screw) for injecting molten material under pressure into the hot runner 14, and an electronic control unit 94 for emitting a signal S. The signal S indicates only the start of the injection phase, i.e. the passage of the molten material from the press 90 towards the mould 10 through the hot runner 14.

The system 100 then comprises an injection unit 74, which is external to the press 90, is *stand-alone,* and implements the WIT technique. The unit 74 comprises
▪ an electronic control unit 80 to receive and react to the signal S,
▪ means 82 for driving the shutter 18 which act only by completely closing or opening the nozzle 16 to allow or block a flow of molten material towards the cavity 12, and
▪ means 84 for driving the water injector 20.

The electronic control unit 80, which controls the operation of the means 82, 84, is configured to wait for the signal S from the electronic control unit 94. Once the signal S has been received, the electronic control unit 80 drives, via the means 82, the shutter 18 to send the maximum flow of molten material towards the cavity 12. Once the injection is finished, the electronic control unit 80 moves the shutter 18 to completely close the nozzle 16.

After a certain time the electronic control unit 80 simultaneously
drives the injector 20 to inject pressurized water into the cavity 12, and
brings the shutter 18 back to the opening position of the nozzle 16 (the so-called *push-back phase),* so that the injected water removes material that has not yet solidified from the molded object and pushes it into the hot runner 14 and towards the press 90.

The injection screw 92 offers no resistance, and the material removed from inside the molded object is thus recovered.

The electronic control unit 80 activates the injector 20 via a timer, so that the operator of the system 100 has considerable difficulty during the programming of the molding process: he must coordinate by trial and error the activation sequence of the shutter 18 and the injector 20. In practice, the process is optimized gradually by progressively increasing the quantity of molten material injected into the cavity 12 and at the same time dosing the quantity of water introduced via the injector 20.

After a certain time, still determined experimentally, the electronic control unit 80 must close the nozzle 16 by moving the shutter 18. In fact, if the water reaches the hot runner 14, it cools the latter, with a loss of energy efficiency. Even worse if the water reaches the press 90, because the water can interact with the molten material there and create explosions or steam bursts. If this happens, it is necessary to interrupt the work cycle and dispose of the water in the press 90.

The electronic control unit 80 can only move the shutter 18 by driving fluid-operated actuators mounted in the mold 12, which are inherently imprecise and non-modular (the nozzle 16 can be only either completely open or closed). This results in a rough control of the position of the shutter 18 with consequent difficulty in obtaining a good final product. If set incorrectly or not perfectly coordinated, the water injection can begin while the shutter 18 is still closed, causing over-pressures in the mold 12 and consequent leaks of steam and high-temperature material.

Furthermore, the electronic control unit 80 is not able to control the pressure of the water when it is injected into the mold 12, but can only set a pressure value of the water when it leaves the unit 74. Therefore, even the regulation of the water pressure inside the cavity 12 is rough and imprecise, also because the electronic control unit 80 can only intervene by varying the open/closed state of the nozzle 16. The pressure of the liquid therefore varies significantly and continuously during the process.

The main object of the invention is to improve this state of the art.

Another object of the invention is to improve the interaction and/or yield of the WIT technology (or equivalent) applied to injection molding systems.

The invention is defined in the attached claims where the dependent claims define advantageous variants.

An aspect of the invention relates to a method for injection molding a hollow object via a system comprising:
- a mold comprising
   ▪ a mold cavity,
   ▪ a hot runner, to guide molten (e.g. plastic) material into the mould, provided with
      ∘ a nozzle towards the cavity and
      ∘ a nozzle shutter to regulate the flow of molten material towards the cavity,
   ▪ an actuator to move the shutter, and
   ▪ a fluid injector (liquid or gas or vapor) to inject pressurized fluid into the cavity and, through the action of the fluid, remove material from the molded object and create an internal cavity (in particular a central cavity) in the molded object;
- a press that is coupled to the mold to inject molten material into it (and preferably also operate parts of the mold),
- a fluid injection unit, external to the press, configured to drive the fluid injector, with the steps of:
   (i) waiting for a cycle start signal from the press;
   (ii) once the cycle start signal has been received, driving the actuator to regulate a flow of molten material towards the cavity by moving the shutter (e.g. linearly);
   (iii) after a certain time, or simultaneously, sending a fluid injection signal to the injection unit to command the latter to activate the fluid injector to inject pressurized fluid into the cavity;
   (iv) after a certain time, or simultaneously, driving the actuator in order to regulate, by moving the shutter with positional continuity and/or according to a programmed dynamic profile, a flow of molten material that the pressurized fluid is removing from the cavity (and from the object) and pushing towards the press.

*Continuously* moving the shutter means that the shutter can be finely moved to any position between the extremes of its stroke, unlike a shutter that can only assume the two opposite end-of-travel positions. *Continuity* is understood as positional (spatial) continuity.

The method provides a precise control of the shutter position, hence a precise control of the nozzle opening degree, hence a precise control of the dynamics of emptying of the molded object by said injected fluid.

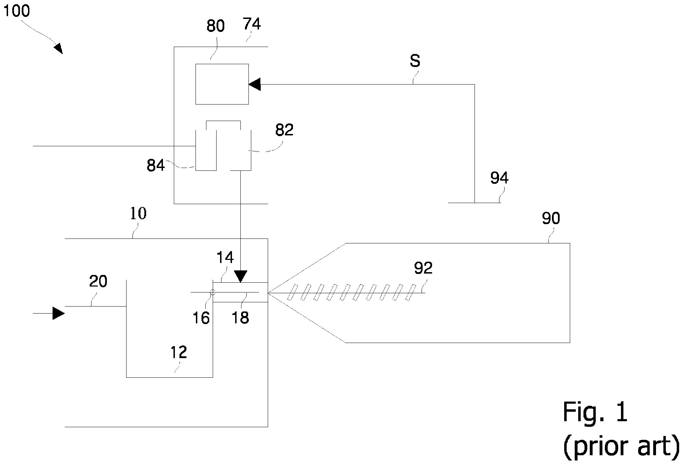

In an advantageous variant of the method, the steps are performed via software and/or electronically (e.g. by a discrete-component circuit) by an electronic control unit external to the press and the injection unit. The method can thus be easily applied to a pre-existing system, such as the one in fig. 1.

Furthermore, the third electronic control unit allows adding useful functions to the system, as defined below.

In an advantageous variant of the method, during the injection of said fluid into the mold, a control signal is generated and sent to the press or to the injection unit as a function of a signal received from the injection unit or the press, respectively.

The cycle start signal may include:
- a signal indicating the start of the injection of molten material into the mold, and/or
- a signal indicating the state of means for injecting molten material under pressure installed in the press, e.g. the position of an injection screw, and/or
- a signal indicative of the pressure of the material exiting the press.

In an advantageous variant of the method, during the injection of said fluid into the mould the position of the shutter is controlled as a function of process parameters or conditions detected
- in the injection unit, e.g. the pressure or velocity or flow rate of said fluid exiting the injection unit; and/or
- in the press, in particular the position of the shutter is controlled as a function of a signal indicating the state of means for injecting molten material under pressure installed in the press, e.g. the position of an injection screw, and/or a signal indicative of the pressure and/or temperature of the material exiting the press;
- in the mold, e.g.
   the pressure of said fluid inside the cavity,
   the flow rate of said fluid entering the cavity,
   the quantity of said fluid present in the cavity,
   the temperature of said fluid present in the cavity.

In a convenient variant of the method,
a signal is received and processed from the press, and
as a function of the received signal, a signal is generated and sent to the injection unit to regulate the flow of said fluid or terminate the injection of said fluid.

This avoids flooding the hot runner or, even worse, the press.

In particular,
a signal is received from the press, e.g. a signal indicating the position of the injection screw, and
this signal is processed to calculate
   the % of emptying of the molded object currently present in the cavity due to said injected fluid, and/or
   the injected quantity of said fluid, and/or
   the pressure of said injected fluid.

More specifically, as a function of the calculated %, a signal is generated and sent to the injection unit to regulate the flow of said fluid or terminate the injection of said fluid.

In an advantageous variant of the method, as a function of the position of the shutter, a signal is generated and sent to the injection unit to regulate the flow of said fluid or terminate the injection of said fluid.

Another aspect of the invention relates to a molding system comprising:
- a mold comprising
   ▪ a mold cavity,
   ▪ a hot runner for guiding molten material into the mold, provided with
      ∘ a nozzle towards the cavity and
      ∘ a nozzle shutter to regulate the flow of molten material towards the cavity,
   ▪ an actuator to move (e.g. linearly) the shutter continuously, and
   ▪ a fluid injector (liquid or gas or vapor) to inject pressurized fluid into the cavity and, through the action of the fluid, remove material from the molded object and create an internal cavity (in particular a central cavity) in the molded object;
- a press that is coupled to the mold to operate parts of the mold and inject molten material into it, comprising
   means for injecting molten material under pressure into the hot runner, and a first electronic control unit configured to emit a cycle start signal indicating a state of the molten material injection process and/or the press at the beginning of the injection cycle,
- a fluid injection unit comprising
   a second electronic control unit, separate from the press, configured for receiving a fluid injection signal and consequently
   driving the fluid injector to inject pressurized fluid into the cavity and, by means of the fluid, remove molten material from the cavity,
- a third electronic control unit, which is
   ▪ external to the press (and the injection unit),
   ▪ distinct from the second electronic control unit,
   ▪ connected to the first electronic control unit to receive the cycle start signal, and
   ▪ configured for
      driving the actuator, in order to regulate a flow of molten material towards the cavity, by continuously moving the shutter, in response to the cycle start signal, and
      sending the fluid injection signal to the second control unit to command the latter to activate the fluid injector.

With this architecture, the third electronic control unit can manage the actuation and/or dynamics of both each shutter and each fluid injector, so the control of the entire molding process is more precise, repeatable, easily programmable, and safe. In particular, it is no longer necessary to program the entire molding process with the primitive timings provided in the second electronic control unit. And the limitations or inaccuracies caused by the poor flexibility of the second electronic control unit can be eliminated from the system, in particular its primitive means of driving the shutter (which are bypassed) and its primitive means of processing the cycle start signal (which are bypassed).

The second electronic control unit may include means for driving the injector and/or means for receiving the cycle start signal. The third electronic control unit, for driving the injector, may be connected to the means for driving the injector or to the receiving means, in which case the third electronic control unit is configured to send the fluid injection signal to the second electronic control unit.

In particular, the architecture of the third electronic control unit may be different from that of the second electronic control unit, so that functions can be added to the system that are independent of the limitations of the second electronic control unit.

Preferably the third electronic control unit is configured for sending the fluid injection signal to the second control unit and then driving the actuator to regulate a flow of molten material from the cavity to the press by continuously moving the shutter.

In this way, the limitation of the second electronic control unit relating to the coarse position control of the shutter is overcome, with advantages both during the injection of the molten material and during the extraction of the molten material when the fluid is injected into the mold. In fact, during the *push-back phase,* a smooth control of the shutter opening allows not only to precisely regulate the water pressure inside the mold, thereby improving the performance of the injector, but also to improve the dynamics of emptying of the object and the final quality of the object because the flow of water from the mold can be finely adjusted, adapting it to the characteristics of the object and/or the emptying that one wants to perform. Consider, for example, the case in which one needs to empty a cavity of the object with a variable cross-section along the object. An ON/OFF control of the shutters cannot guarantee the optimal emptying dynamics for each segment of cross-section, while a smooth control can.

Preferably, the shutter is associated with an electric drive, capable of continuously and precisely moving the shutter, and the third electronic control unit is configured to send an electrical signal to the drive to continuously vary the shutter position.

Between the third electronic control unit and the second electronic control unit there is preferably a first data communication channel, preferably bidirectional.

For example, the fluid injection signal generated by the third electronic control unit travels on the first data communication channel.

Between the third electronic control unit and the first electronic control unit there is preferably a second data communication channel, preferably bidirectional.

For example, the cycle start signal sent from the first electronic control unit to the third electronic control unit travels on the second data communication channel.

Preferably, the first and/or second data communication channel is a signal cable, a data bus or a wireless network.

With a bidirectional channel, a closed-loop control can be advantageously implemented in the system.

Since the third electronic control unit is connected to the first electronic control unit and the second electronic control unit, the third electronic control unit can generate and send to one or each of the other two electronic control units a control signal as a function of a signal received from the other electronic control unit. Therefore, the third electronic control unit can, for example, influence the activity of the second electronic control unit as a function of a condition or event detected in the first electronic control unit, or vice versa.

Thus, for example, the activation and/or deactivation of the fluid injector can occur according to a more sophisticated logic that takes into account more parameters or process conditions, to the benefit of the quality of the final molded product.

Or, for example, the position of the shutter can be controlled by the third electronic control unit according to a more sophisticated logic that takes into account parameters or process conditions inherent to, or detected by, the first and/or second electronic control unit.

The signals sent on the first and/or second data communication channel are analog or digital signals.

For a more sophisticated control, the third electronic control unit is preferably configured to receive and react to a signal generated by the first electronic control unit which may include:
a signal indicating the start of injection of molten material into the mold; and/or
a signal indicative of the state of said means for injecting molten material under pressure, e.g. the position of an injection screw, and/or
a signal indicative of the pressure of the material exiting the press.

Advantageously the third electronic control unit is preferably configured for
- reading the signal indicating the position of an injection screw installed in the press to push molten material into the mold and, during the injection of said fluid,
- calculating the actual % of emptying of the object present in the cavity due to the injected fluid and/or the quantity of said injected fluid and/or the pressure of said injected fluid, and
- as a function of the calculated % or result, sending a signal to the second electronic control unit to regulate the flow of said fluid or terminate the injection of said fluid.

Advantageously, the third electronic control unit is configured to read and process a signal indicating the position of the shutter, and, as a function of such signal, send a signal to the second electronic control unit to regulate the flow of said fluid or terminate the injection of said fluid.

The advantages of the invention will be made even clearer by the following description of a preferred system, wherein
- Fig. 1 shows a schematic of a known injection molding system,
- Fig. 2 shows a schematic of an injection molding system according to the invention,
- Figs. 3-5 show position profiles followed by one or more shutters during an injection cycle.

In the figures: equal numbers indicate equal components, arrows indicate signal lines.

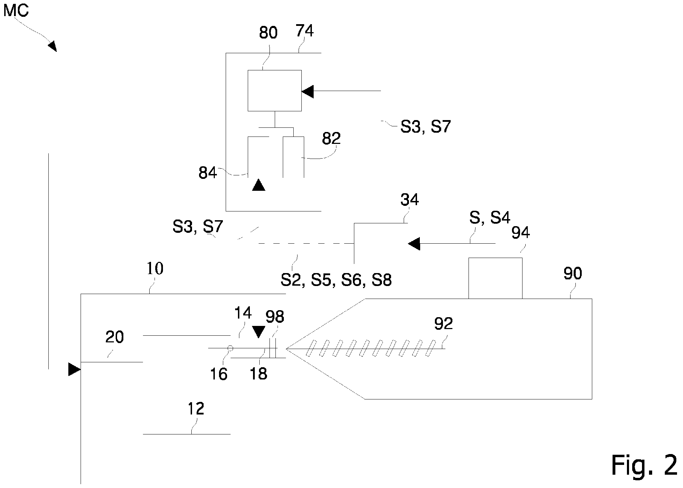

The system MC of fig. 2 comprises the mold 10 of fig. 1 with a similar installation on board, the same press 90 and the same unit 74.

Unlike the known system in Fig. 1, the system MC also comprises an electronic control unit 34, which is external to the press 90 and connected via signal lines to the press 90, to the electronic control unit 80 and to an actuator 98 of the shutter 18 mounted in the mould 10.

One or each signal line may be e.g. an electrical signal cable, a data bus or a wireless channel.

The electronic control unit 34 is configured to wait for the signal S from the press 90 and then generate and send in sequence signals S2, S5, S6, S8 to the actuator 98 and signals S3, S7 to the electronic control unit 80.

The signal S generated by the press 90 is e.g. indicative of the start of the injection of molten material or of the state of the means 92, e.g. the position of the injection screw.

The electronic control unit 34 is configured to continuously adjust the position of the shutter 18 via the signal S2, S5, S6. For this purpose, the actuator 98 is preferably electric (e.g. a rotary motor or a linear actuator).

The line carrying the signals S3, S7 may be connected to the control unit 80 or to the means 84, see option in dashed line.

The electronic control unit 34 is configured to command the electronic control unit 80 to activate or stop the injector 20 via the signal S3, S7 respectively.

Basically, in the system MC an injection cycle has the following steps:
1 the press 90 controls and determines the start of the cycle. The press 90 emits the signal S when it begins to inject molten material into the mold 10;
2 when the electronic control unit 34 receives the signal S from the press 90, it generates the signal S2 to drive the actuator 98 in order to move the shutter 18 to open the nozzle 16. The introduction of molten material into the cavity 12 now begins. The electronic control unit 34 may control the movement of the shutter 18 according to programmed profiles, e.g. of speed and/or position profiles, along its stroke;
3 after a certain time, the injection of molten material ends. In most applications, the entire cavity 12 is occupied by molten material. The press 90 generates a warning signal S4 that injection has ended;
4 the electronic control unit 34 reads the signal S4 and reacts by
   - generating and sending to the electronic control unit 80 a signal S3 to command it to activate the injection of fluid through the injector 20; and
   - generating a signal S5 to drive the shutter 18 so that the nozzle 16 is completely or partially open. Not necessarily the shutter 18 is completely closed in step 2), it may also be partially closed. In some cases it may also be closed and re-opened before step 5). The dynamics of the shutter 18 allows the filling of the cavity 12 with molten material to be managed in the desired way;
5 the electronic control unit 80 activates the injector 20 as soon as it receives the signal S3. Pressurized fluid enters the cavity 12 and pushes molten material backwards into the hot runner 14 and the press 90. The material removed by the fluid creates an internal cavity in the molded object. In this step there is no thrust produced by the means 92, so the excess material removed from the molded object by the fluid, which forms a central cavity in the object, can re-enter the press 90;
6 during the fluid injection, the electronic control unit 34 may optionally adjust the position of the shutter 18 with a signal S6 in order to control the fluid pressure inside the cavity 12 and/or the dynamics of the re-entry of the molten material into the press 90. The possibility of adjusting the opening of the nozzle 16 via the position of the shutter 18 allows the flow rate of the material that re-enters the press 90 to be programmed and locally varied. This is very useful, for example, in applications in which the objects to be molded have a different volume or shape, so that the volume of the material that re-enters the press 90 is not the same for each hot runner 14; in this way, the material present in the mould and in the hot runner act as a brake/obstacle to the thrust of the water;
7 the electronic control unit 34 is constantly processing to determine the instant at which a desired quantity of removed material has re-entered the press 90. Such instant is, for example, determined by a timer or, preferably, calculated by detecting the state of the means 92, for example the position of the injection screw. When the screw, pushed by the removed material, has moved backwards by a certain stroke, this means that a correspondingly determined volume of material has re-entered the press 90. The electronic control unit 34 then compares the position of the screw with a threshold value, and if the threshold value is reached, it moves on to step 8);
8 the electronic control unit 34 sends a signal S7 to the electronic control unit 80 to command it to stop the injection of fluid through the injector 20 and adjusts the position of the shutter 18 with a signal S8 so as to close the nozzle 16;
9 the fluid still present inside the molded object is evacuated;
10 the press 90 opens the mold 12, the molded object is extracted, the press 90 closes the mold 12 and the cycle begins again.

The fluid injected by the injector 20 is a liquid, e.g. water, or a gas such as CO ₂ or nitrogen, or water vapor.

In the mold 10 there may also be a multiplicity of hot runners 14 with relative shutters 16. All are controlled by the electronic control unit 34, even in different ways.

The mold can also have multiple cavities, with different shapes, sizes and thicknesses (called *family molds*)*.* Each cavity requires different injection settings and adjustments.

In a variant, the unit 74 can be simplified by eliminating the means 82 since they are not used.

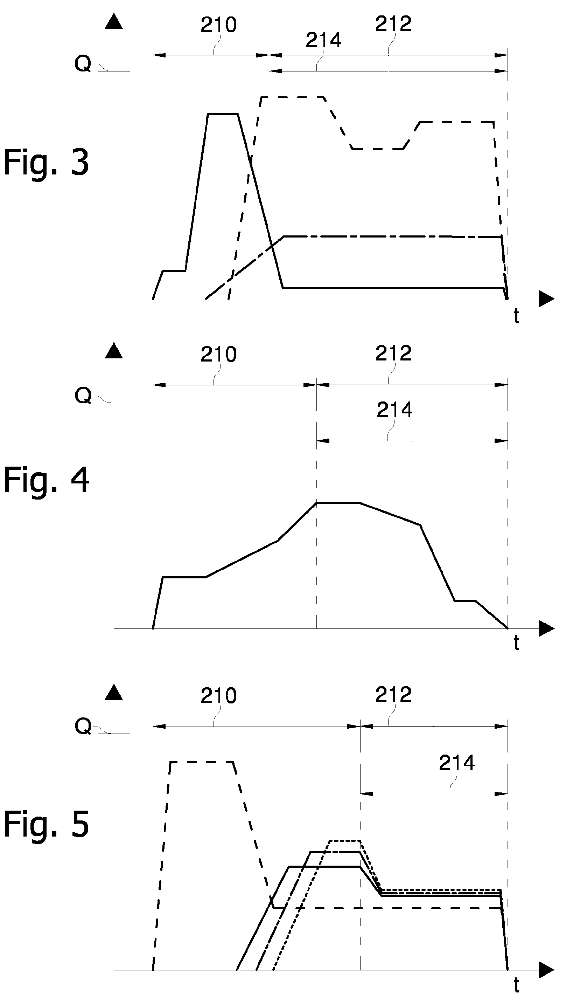

Shown in Figs. 3-5 are some examples of position/time graphs for the position of various shutters 18 during the injection cycle. The profiles for the different shutters are distinguishable by the type of line stroke.

The end of the opening stroke of a shutter 18 (nozzle completely open) is indicated by Q, the abscissae axis corresponds to the zero position (nozzle completely closed). The phase of opening the shutters 18 and filling of the mold 10 with molten material is the interval 210, while the phase of closing the shutters 18 and packing of the molten material is the interval 212.

The dynamics of the opening phase is known, where the shutter 18 can be moved in different ways, with different speeds, with pauses, accelerations and decelerations. The closing and packing phase also shows different modes of movement of the shutter with variations in speed, accelerations, decelerations, pauses.

The injector 20 is activated in the *push-back phase* (denoted by 214), which occurs at any time during the injection process as long as there is molten material in the cavity 12. Generally this coincides approximately with the beginning of the interval 212. Note the difference with the system 100.

In the system 100, the unit 74 can perform the opening and closing phases of a shutter 18 with just one movement, therefore also in the *push back phase 214.*

The system MC instead allows that during the *push back phase* the shutters are characterized by speed variations, accelerations, decelerations, pauses. The use of such a management of the shutters during the *push back phase* allows advantageously exploiting the braking action of the molten material, present in the cavity 12 and/or in the hot runner 14, imposed on the injected fluid.

Other opening and/or closing profiles that can be implemented by the actuator 98 for one or each shutter 18 are described and shown in the following documents: PCT/IB2019/053936, IT102017000037002, IT102016000080198, IT102016000055364, IT102015000008368, ITTO2014A001030, ITTO2014A001021, ITTO2014A000701, WO2012/074879A1, WO2012/087491 A1, and WO2018/020177A1.

## Claims

1. Method for injection molding a hollow object using a system comprising
- a mold comprising
a mold cavity,
a hot runner, for guiding molten material into the mold, provided with
a nozzle towards the cavity and
a nozzle shutter for regulating the flow of molten material towards the cavity,
an actuator for moving the shutter, and
a fluid injector for injecting pressurized fluid into the cavity and, through the action of the fluid, removing material from the molded object to create an internal cavity in the molded object,
- a press that is coupled to the mold for injecting molten material into it,
- a fluid injection unit, external to the press, configured to drive the fluid injector, with the steps of:
(i) waiting for a cycle start signal from the press,
(ii) upon receiving the cycle start signal, driving the actuator in order to regulate a flow of molten material towards the cavity by displacing the shutter,
(iii) after a certain time, or simultaneously, sending a fluid injection signal to the injection unit in order to command the latter to activate the fluid injector to inject fluid under pressure into the cavity;
(iv) after a certain time, or simultaneously, driving the actuator in order to regulate, by displacing the shutter with positional continuity and/or according to a programmed dynamic profile, a flow of molten material that the pressurized fluid is removing from the cavity and pushing towards the press.

2. Method according to claim 1, wherein the steps are performed via software and/or electronically by an electronic control unit external to the press and the injection unit.

3. Method according to claim 1 or 2, wherein during the injection of said fluid into the mold a control signal is generated and sent to the press or to the injection unit as a function of a signal received from the injection unit or from the press, respectively.

4. Method according to any previous claim, wherein during the injection of said fluid into the mold the position of the shutter is controlled as a function of the pressure or speed or flow rate of said fluid coming out the injection unit.

5. Method according to any previous claim, wherein during the injection of said fluid into the mold the position of the shutter is controlled as a function of a signal indicative of the state of means installed in the press configured to inject molten material under pressure into the mold.

6. Method according to claim 5, wherein during the injection of said fluid into the mold the position of the shutter is controlled as a function of a signal indicative of the position of an injection screw which is installed in the press and configured to inject pressurized molten material in the mold.

7. Method according to any preceding claim, wherein during the injection of said fluid into the mold
the state of means installed in the press and configured to inject molten material into the mold under pressure, is detected,
from said detected state, the emptying % of the molded object currently located in the cavity due to said injected fluid is calculated, and
a signal is generated and sent to the injection unit to regulate the flow of said fluid or terminate the injection of said fluid as a function of such %.

8. Injection molding system comprising:
- a mold comprising
• a mold cavity,
• a hot runner, for guiding molten material into the mold, provided with
∘ a nozzle towards the cavity and
∘ a nozzle shutter for regulating the flow of molten material towards the cavity,
• an actuator for displacing the shutter with positional continuity, and
• a fluid injector for injecting pressurized fluid into the cavity and, through the action of the fluid, remove material from the molded object to create an internal cavity in the molded object,
- a press which is coupled to the mold to operate parts of the mold and inject molten material into it, comprising
means for injecting molten material under pressure to the hot runner, and
a first electronic control unit configured to emit a cycle start signal which indicates a state of the injection process of the molten material and/or of the press at the beginning of the injection cycle,
- a fluid injection unit comprising
a second electronic control unit, separate from the press, configured for
receiving a fluid injection signal and consequently driving the fluid injector in order to inject pressurized fluid into the cavity and, by means of the fluid, remove molten material from the cavity,
- a third electronic control unit, which is
• external to the press and the injection unit,
• distinct from the second electronic control unit,
• connected to the first electronic control unit to receive the cycle start signal, and
• configured for driving the actuator, in order to regulate a flow of molten material towards the cavity, by displacing the shutter, in response to the cycle start signal, and sending to the second control unit the fluid injection signal to command the latter to activate the fluid injector.

9. System according to claim 8, wherein the shutter is associated with an electric actuator, capable of displacing the shutter with positional continuity, and the third electronic control unit is configured to send an electrical signal to the actuator to vary the shutter position with positional continuity.

10. System according to claim 9, wherein the third electronic control unit is configured for
- reading a signal indicative of the position of an injection screw installed in the press for pushing molten material into the mold, and
- during the injection of said fluid, calculating
∘ the actual emptying % of the object present in the cavity due to the injected fluid and/or
∘ the quantity of said injected fluid and/or the pressure of said injected fluid, and
- as a function of the % or the calculated result, sending a signal to the second electronic control unit to regulate the flow of said fluid or terminate the injection of said fluid.
